**Europäisches Patentamt**

**European Patent Office**

**Office européen des brevets**

(19)

(11) Veröffentlichungsnummer : **0 315 617 B1**

## (12) EUROPÄISCHE PATENTSCHRIFT

(45) Veröffentlichungstag der Patentschrift :
**16.10.91 Patentblatt 91/42**

(51) Int. Cl.$^5$ : **E04C 3/38, E04B 1/30**

(21) Anmeldenummer : **88890228.5**

(22) Anmeldetag : **05.09.88**

(54) **Verbindungselement.**

Teilanmeldung 90117572.9 eingereicht am 05/09/88.

(30) Priorität : **04.11.87 AT 2916/87**

(43) Veröffentlichungstag der Anmeldung :
**10.05.89 Patentblatt 89/19**

(45) Bekanntmachung des Hinweises auf die
Patenterteilung :
**16.10.91 Patentblatt 91/42**

(84) Benannte Vertragsstaaten :
**DE FR GB IT SE**

(56) Entgegenhaltungen :
**AT-B- 385 545**
**FR-A- 1 216 476**

(56) Entgegenhaltungen :
**FR-A- 2 563 259**
**GB-A- 685 575**
**GB-A- 990 412**
**US-A- 2 458 606**
**US-A- 2 688 167**
**US-A- 2 776 457**

(73) Patentinhaber : **Wolf Systembau Gesellschaft
m.b.H. KG
Fischerbühel 1
A-4644 Scharnstein (Oberösterreich) (AT)**

(72) Erfinder : **Wolf, Johann
Fischerbühel 1
A-4644 Scharnstein Oberösterreich (AT)**

(74) Vertreter : **Beer, Manfred, Dipl.-Ing. et al
Lindengasse 8
A-1070 Wien (AT)**

## Beschreibung

Die Erfindung bezieht sich auf ein Verbindungselement für Balken, insbesondere zur Verbindung von hintereinander angeordneten Stützen aus Holzbalken oder Profilstahlstützen mit Dachriegeln zur Errichtung von Hallenbauwerken u.dgl., wobei die Holzbalken und die Dachriegel aufeinander zulaufende (konvergierende) Seitenflächen aufweisen.

Aus der US-A-2796642 (C.H. Woodworth) ist eine Stütz-Dachriegel-Verbindung bekannt, bei der eine Stütze, die konvergierende Seitenflächen aufweist, mit einem gleichförmigen Dachriegel durch eine abgewinkelte, außen aufgeschraubte Stahlschiene verbunden ist. Die Enden der Balken sind entsprechend der Dachneigung schräg geschnitten und liegen mit den Enden (Stirnflächen) zur Vermeidung der Aufsplitterung an einer beweglichen und damit an die Schnittflächen anpaßbaren Stahlplatte auf, die mit Widerlager zur Aufnahme des Druckes versehen ist. Dabei können die Balken zusätzlich an der Innenseite mit schraubbaren kurzen Schenkeln, die mit den Widerlagern fest verbunden sind, gesichert werden.

Eine weitere Knotenausbildung ist aus der US-A-3099468 (C.E. Meyerdick) bekannt. Diese ist jedoch für runde oder rechteckige Balken gedacht. Die Balken müssen zudem weitgehend maßgenau sein, da lediglich die äußeren Enden der äußeren Einfassung anpreßbar sind. Der Knoten weist keine Trennung der beiden Anschlüsse auf, so daß die Montage auf der Baustelle sehr erschwert ist.

Ausgehend von diesem bekannten Stand der Technik besteht die Aufgabe der Erfindung darin, Balken bzw. daraus gefertigte Verbundträger, die konvergierende Seitenflächen aufweisen, oder Stützen aus Profilstahl und Dachriegel, die konvergierende Seitenflächen aufweisen, mit anpaßbaren Elementen, auf der Baustelle einfach montierbar auszubilden und den Verbindungsknoten so zu gestalten, daß dieser dem Lastverlauf konform ist.

Zur Lösung dieser Aufgabe ist erfindungsgemäß ein Verbindungselement zur Verbindung von Profilstahlstützen mit aus Holz bestehenden Dachriegeln vorgesehen, wobei der Dachriegel eine satt an der Stütze anliegende Stirnfläche aufweist und zur Verbindung mit der entsprechend der Dachneigung abgeschrägtene Stütze an der Oberseite des Dachriegels ein Stahlband befestigt ist, das mit der Stütze durch Schweißung oder mittels einer an der Stütze befestigten Flanschplatte verbindbar ist und wobei an der Innenseite zwischen Stütze und Dachriegel ein voutenförmig ausgebildetes Stützelement vorgesehen ist.

Dabei ist in einer Ausführungsform ferner vorgesehen, daß der an der Stütze anliegende Schenkel des Stützelementes mit Langlöchern zur Aufnahme einer Schraubverbindung mit einem Flansch des Stahlprofils der Stütze versehen ist, wobei mit dem Stahlprofil eine Sicherungsscheibe zur Abstützung des Stützelementes während der Herstellung der Verbindung befestigbar ist. Dabei kann die Sicherungsscheibe erfindungsgemäß vielkantig ausgebildet sein, wobei die einzelnen Kanten einen unterschiedlichen Abstand von einer zur Befestigung an der Stütze vorgesehenen Bohrung aufweisen.

Weitere Einzelheiten der Erfindung sind der anschließenden Beschreibung zu entnehmen. Ein Ausführungsbeispiel des erfindungsgemäßen Verbindungselementes ist in der Zeichnung schematisch veranschaulicht. Es zeigt

Fig. 1    eine Seitenansicht eines Verbindungselementes und
Fig. 2    eine Einzelheit von Fig. 1 in Seitenansicht.

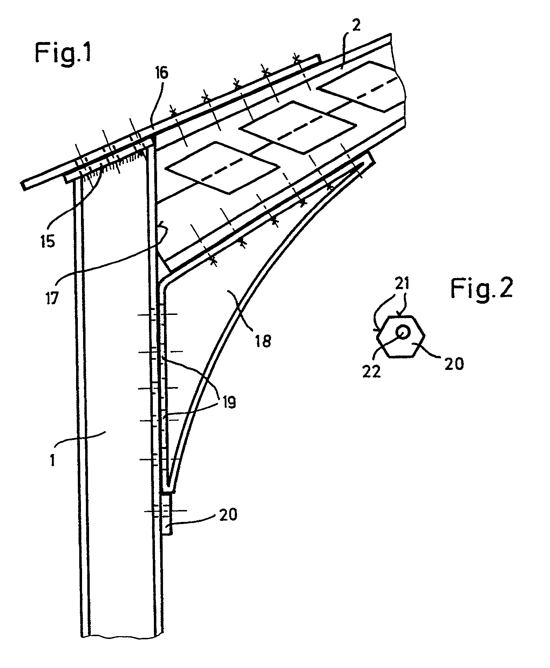

In Fig. 1 ist ein Verbindungselement einer Stütze 1, die aus einem I-Träger besteht, mit einem Verbund-Dachriegel 2 mit konvergierenden Seitenflächen dargestellt. Die Stahlprofilstütze 1 ist oben mit einer aufgeschweißten Flanschplatte 15 abgeschlossen, die entsprechend der verlangten Dachneigung geneigt ist. Mit einem am Dachriegel 2 vormontierten Stahlband 16 wird dieser mit der Flanschplatte 15 der Stütze 1 verschraubt. Der Dachriegel 2 ist so schräg geschnitten, daß seine Stirnfläche 17 großflächig an der Stütze 1 anliegt. Bei großen Objekten mit einheitlichen Stützen 1 kann das Stahlband 16 auch direkt mit der Stütze verschweißt sein, wenn entsprechende Vorkehrungen für eine problemlose Verschraubung des Dachriegels 2 getroffen sind (vorgebohrte Dachriegel und Preßluftschrauber). Das Stahlband 16 kann auch nach außen verlängert sein, um eventuell Dachvorsprünge ansetzen zu können.

An der Innenseite der Stütze 1 und des Dachriegels 2 ist ein Stützelement 18 angeschraubt, das an der Stützseite Langlöcher 9 besitzt, um eine satte Anlage am Dachriegel 2 zu gewährleisten. Um die Dachlast optimal in die Stütze abzuführen, ist das Stützelement 18 als Voute ausgeführt und entsprechend der Last ausgesteift. Zur Verhinderung einer Verschiebung in den Langlöchern 9 entlang der Stütze 1 ist das Ende der Voute mit einer Sicherungsscheibe 20 fixiert. Diese ist mehrkantig, wobei die Kanten 21 verschiedene Abstände zur Bohrung 22 aufweisen (Fig. 2) und die Sicherungsscheibe kann somit an das Stützelement 18 anliegend an der Stütze 1 angesetzt und mit der Stütze 1 verschraubt werden.

Im Rahmen der Erfindung können die Holzbalken der Dachriegel mit je zwei einander gegenüberliegenden, aufeinander zulaufenden Seitenflächen, aber auch an vier Seitenflächen konvergierend ausgebildet sein.

## Patentansprüche

1. Verbindungselement zur Verbindung von Profilstahlstützen mit aus Holz bestehenden Dachriegeln, die aufeinander zulaufende (konvergierende) Seitenflächen aufweisen, zur Errichtung von Hallenbauten u.dgl., dadurch gekennzeichnet, daß der Dachriegel (2) eine satt an der Stütze (1) anliegende Stirnfläche (17) aufweist und daß zur Verbindung mit der entsprechend der Dachneigung abgeschrägten Stütze (1) an der Oberseite des Dachriegels (2) ein Stahlband (16) befestigt ist, das mit der Stütze (1) durch Schweißung oder mittels einer an der Stütze (1) befestigten Flanschplatte (15) verbindbar ist und daß an der Innenseite zwischen Stütze (1) und Dachriegel (2) ein voutenförmig ausgebildetes Stützelement (18) vorgesehen ist.

2. Verbindungselement nach Anspruch 1, dadurch gekennzeichnet, daß der an der Stütze (1) anliegende Schenkel des Stützelementes (18) mit Langlöchern (19) zur Aufnahme einer Schraubverbindung mit einem Flansch des Stahlprofils der Stütze (1) versehen ist, wobei mit dem Stahlprofil eine Sicherungsscheibe (20) zur Abstützung des Stützelementes (18) während der Herstellung der Verbindung befestigbar ist.

3. Verbindungselement nach Anspruch 1 oder 2, dadurch gekennzeichnet, daß die Sicherungsscheibe (20) vielkantig ausgebildet ist, wobei die einzelnen Kanten (21) einen unterschiedlichen Abstand von einer zur Befestigung an der Stütze (1) vorgesehenen Bohrung (22) aufweisen.

## Claims

1. Connecting element for connecting sectional steel stanchions to roof trusses consisting of wood which have lateral surfaces tapering (converging) towards one another, for erecting hangar constructions and the like, characterised in that the roof truss (2) has an end face (17) resting fully against the stanchion (1) and a steel band (16) is fixed to the top of the roof truss (2) for connection to the stanchion (1), which is sloped in accordance with the pitch of the roof, the steel band being connectable to the stanchion (1) by welding or by means of a flange plate (15) fixed to the stanchion (1), and an arched supporting element (18) is provided on the inside between the stanchion (1) and the roof truss (2).

2. Connecting element according to claim 1, characterised in that that side of the supporting element (18) which bears against the stanchion (1) is furnished with slots (19) for receiving a bolted connection to a flange of the steel section of the stanchion (1), a safety disc (20) for supporting the supporting element (18) during the making of the connection being fixable to the steel section.

3. Connecting element according to claim 1 or 2, characterised in that the safety disc (20) is of multisided form, the individual sides (21) being at a different distance from a hole (22) provided for fixing to the stanchion (1).

## Revendications

1. Elément d'assemblage pour l'assemblage de poteaux constitués de profilés en acier avec des poutres de toiture en bois, qui comportent des faces latérales (convergentes), pour l'édification de halles et analogues, caractérisé en ce que la poutre de toiture (2) comporte une surface frontale (17) appliquée à plat-point sur le poteau (1), et en ce qu'une patte en acier (16) est fixée sur la face supérieure de la poutre de toiture (2) pour l'assemblage avec le poteau (1) coupé en biais suivant la pente du toit, laquelle patte peut être assemblée par soudure sur le poteau (1) ou par une platine (15) fixée sur le poteau (1) et en ce qu'il est prévu une console (18) en forme de voûte sur la face intérieure entre le poteau (1) et la poutre de toiture (2).

2. Elément d'assemblage selon la revendication 1, caractérisé en ce que l'aile de la console (18) appliquée contre le poteau (1) est munie de trous oblongs (19) pour un assemblage par vis avec une aile du profilé en acier du poteau (1), une came de blocage (20) pouvant être fixée sur le profilé en acier pour le soutien de la console (18) pendant la réalisation de l'assemblage.

3. Elément d'assemblage selon la revendication 1 ou 2, caractérisé en ce que la came de blocage (20) comporte une pluralité de côtés, les différents côtés (21) étant disposés à différentes distances d'un perçage (22) prévu pour la fixation sur le poteau (1).

3

Fig.1

Fig.2